# EUROPEAN PATENT APPLICATION

(11) **EP 4 389 367 A1**
(43) Date of publication of application: **26.06.2024**
(21) Application number: 22858552.7
(22) Date of filing: 19.08.2022
(51) Int. Cl.: B25J 13/08, B25J 15/08

(54) **HOLDING MODE DETERMINATION DEVICE FOR ROBOT, HOLDING MODE DETERMINATION METHOD, AND ROBOT CONTROL SYSTEM**

(30) Priority: 19.08.2021 JP 2021134391
(71) Applicant: Kyocera Corporation, Kyoto-shi Kyoto 612-8501 (JP)
(72) Inventor: ASATANI, Minami, Kyoto-shi, Kyoto 612-8501 (JP)
(74) Representative: TBK
(86) International application number: PCT/JP2022/031456
(87) International publication number: WO 2023/022237

(57) **Abstract**

A holding mode determination device for a robot includes a controller and an interface. The controller is configured to output, to a display device, at least one holding mode of a robot for a target object together with an image of the target object. The at least one holding mode is inferred by classifying the target object into at least one of multiple inferable holding categories. The interface is configured to acquire, via the display device, a user's selection of the at least one holding mode.

## Description

### CROSS-REFERENCE TO RELATED APPLICATIONS

This application claims priority based on Japanese Patent Application No. 2021-134391 filed in Japan on August 19, 2021, the entire disclosure of which is incorporated herein by reference.

### TECHNICAL FIELD

The present disclosure relates to a holding mode determination device for a robot, a holding mode determination method for a robot, and a robot control system.

### BACKGROUND OF INVENTION

A method for appropriately holding an object having a certain shape by a robot hand is known (see, for example, Patent Literature 1).

### CITATION LIST

### PATENT LITERATURE

Patent Literature 1: Japanese Unexamined Patent Application Publication No. 2005-169564

### SUMMARY

A holding mode determination device for a robot according to an embodiment of the present disclosure includes a controller and an interface. The controller is configured to output, to a display device, at least one holding mode of a robot for a target object together with an image of the target object, the at least one holding mode being inferred by classifying the target object into at least one of multiple inferable holding categories. The interface is configured to acquire, via the display device, a user's selection of the at least one holding mode.

A holding mode determination method for a robot according to an embodiment of the present disclosure includes outputting, to a display device, at least one holding mode of a robot for a target object together with an image of the target object, the at least one holding mode being inferred by classifying the target object into at least one of multiple inferable holding categories. The holding mode determination method includes acquiring, via the display device, a user's selection of the at least one holding mode.

A robot control system according to an embodiment of the present disclosure includes a robot, a robot control device configured to control the robot, a holding mode determination device configured to determine a mode in which the robot holds a target object, and a display device. The holding mode determination device is configured to output, to the display device, at least one holding mode of the robot for the target object together with an image of the target object, the at least one holding mode being inferred by classifying the target object into at least one of multiple inferable holding categories. The display device is configured to display the image of the target object and the at least one holding mode for the target object. The display device is configured to receive an input of a user's selection of the at least one holding mode, and output the user's selection to the holding mode determination device. The holding mode determination device is configured to acquire, from the display device, the user's selection of the at least one holding mode.

### BRIEF DESCRIPTION OF THE DRAWINGS

FIG. 1 is a block diagram illustrating an example configuration of a robot control system according to an embodiment.
FIG. 2 is a schematic view illustrating an example configuration of the robot control system according to an embodiment.
FIG. 3 is a diagram illustrating an example of a model that is being trained.
FIG. 4 is a diagram illustrating an example of a holding mode inference model.
FIG. 5 is a diagram illustrating an example configuration of determining a holding mode by a trained model.
FIG. 6 is a diagram illustrating an example configuration of determining a holding mode by the holding mode inference model.
FIG. 7A is a view illustrating an example of a grasping position when a target object is classified into a first class.
FIG. 7B is a view illustrating an example of grasping positions when a target object is classified into a second class.
FIG. 7C is a view illustrating an example of grasping positions when a target object is classified into a third class.
FIG. 8A is a view illustrating an example of a grasping position determined when a target object is classified into a first class.
FIG. 8B is a view illustrating an example of grasping positions determined when a target object is classified into a second class.
FIG. 8C is a view illustrating an example of grasping positions determined when a target object is classified into a third class.
FIG. 9 is a flowchart illustrating an example procedure of a holding mode determination method according to an embodiment.

### DESCRIPTION OF EMBODIMENTS

In a trained model that receives an image of an object and outputs a holding mode for the object, a user is unable to control the output of the trained model and is unable to control the holding mode for the object. There is a demand for increasing the convenience of a trained model that outputs a holding mode for an object. A holding mode determination device for a robot, a holding mode determination method for a robot, and a robot control system according to an embodiment of the present disclosure can increase the convenience of a trained model that outputs a holding mode for an object.

### (Example configuration of robot control system 100)

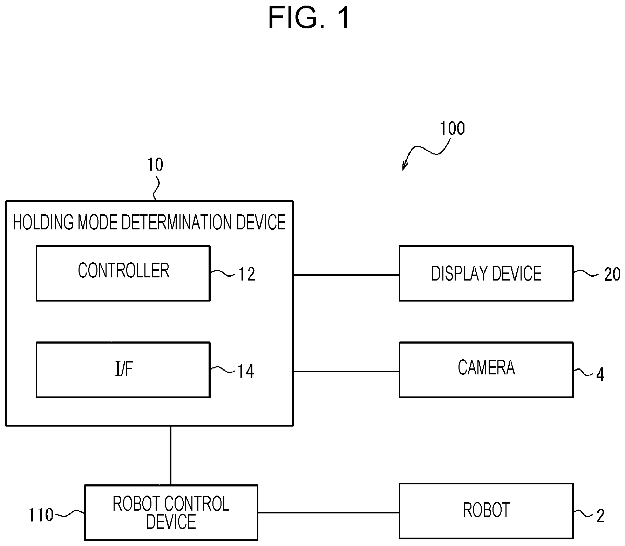

As illustrated in FIG. 1, a robot control system 100 according to an embodiment of the present disclosure includes a robot 2, a robot control device 110, a holding mode determination device 10, a display device 20, and a camera 4. The robot 2 holds, by an end effector 2B, a holding target object 80 and performs work. The holding target object 80 is also simply referred to as a target object. The robot control device 110 controls the robot 2. The holding mode determination device 10 determines a mode to be used by the robot 2 to hold the holding target object 80, and outputs the mode to the robot control device 110. The mode in which the robot 2 holds the holding target object 80 is also simply referred to as a holding mode. The holding mode includes a position at which the robot 2 touches the holding target object 80, a force to be applied to the holding target object 80 by the robot 2, or the like.

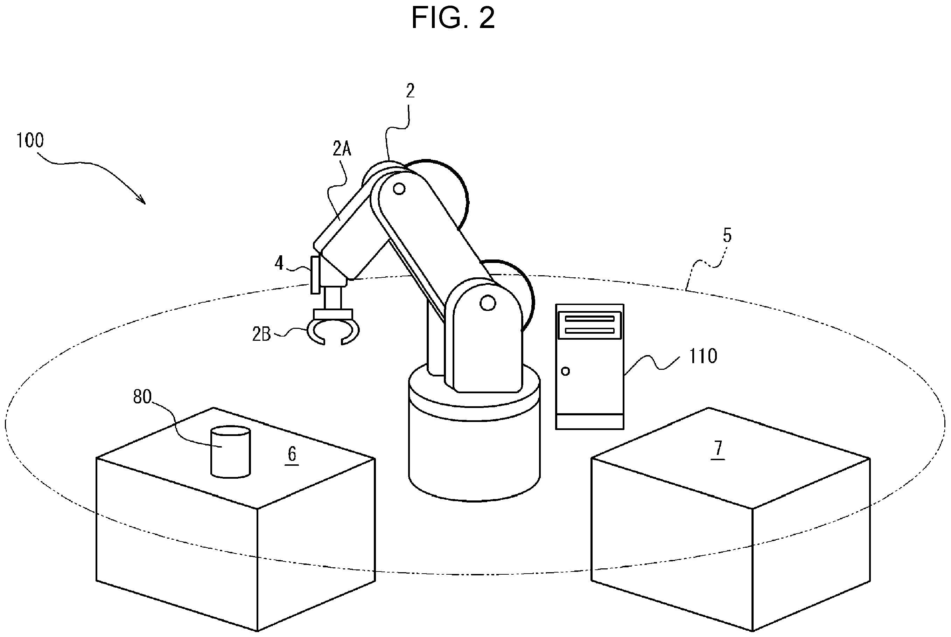

As illustrated in FIG. 2, in the present embodiment, the robot 2 holds the holding target object 80 at a work start point 6. That is, the robot control device 110 controls the robot 2 to hold the holding target object 80 at the work start point 6. The robot 2 may move the holding target object 80 from the work start point 6 to a work target point 7. The holding target object 80 is also referred to as a work target. The robot 2 operates within an operation range 5.

### <Robot 2>

The robot 2 includes an arm 2A and the end effector 2B. The arm 2A may be, for example, a six-axis or seven-axis vertical articulated robot. The arm 2A may be a three-axis or four-axis horizontal articulated robot or a SCARA robot. The arm 2A may be a two-axis or three-axis orthogonal robot. The arm 2A may be a parallel link robot or the like. The number of axes constituting the arm 2A is not limited to that illustrated. In other words, the robot 2 includes the arm 2A connected by multiple joints, and is operated by driving the joints.

The end effector 2B may include, for example, a grasping hand configured to grasp the holding target object 80. The grasping hand may include multiple fingers. The number of fingers of the grasping hand may be two or more. Each finger of the grasping hand may include one or more joints. The end effector 2B may include a suction hand configured to suck and hold the holding target object 80. The end effector 2B may include a scooping hand configured to scoop and hold the holding target object 80. The end effector 2B is also referred to as a holding portion that holds the holding target object 80. The end effector 2B is not limited to these examples, and may be configured to perform other various operations. In the configuration illustrated in FIG. 1, the end effector 2B includes a grasping hand.

The robot 2 is capable of controlling the position of the end effector 2B by operating the arm 2A. The end effector 2B may include a shaft serving as reference of a direction in which the end effector 2B acts on the holding target object 80. When the end effector 2B includes a shaft, the robot 2 is capable of controlling the direction of the shaft of the end effector 2B by operating the arm 2A. The robot 2 controls the start and end of an operation in which the end effector 2B acts on the holding target object 80. The robot 2 controls the operation of the end effector 2B while controlling the position of the end effector 2B or the direction of the shaft of the end effector 2B, thereby being capable of moving or processing the holding target object 80. In the configuration illustrated in FIG. 1, the robot 2 causes the end effector 2B to hold the holding target object 80 at the work start point 6, and moves the end effector 2B to the work target point 7. The robot 2 causes the end effector 2B to release the holding target object 80 at the work target point 7. In this way, the robot 2 is capable of moving the holding target object 80 from the work start point 6 to the work target point 7.

### <Sensor>

The robot control system 100 further includes a sensor. The sensor detects physical information of the robot 2. The physical information of the robot 2 may include information regarding the actual positions or postures of individual components of the robot 2 or the speeds or accelerations of the individual components of the robot 2. The physical information of the robot 2 may include information regarding forces that act on the individual components of the robot 2. The physical information of the robot 2 may include information regarding a current that flows through a motor that drives the individual components of the robot 2 or a torque of the motor. The physical information of the robot 2 represents a result of an actual operation of the robot 2. That is, the robot control system 100 acquires the physical information of the robot 2 and thereby being capable of grasping a result of an actual operation of the robot 2.

The sensor may include a force sensor or a tactile sensor that detects, as physical information of the robot 2, a force, a distributed pressure, a slip, or the like acting on the robot 2. The sensor may include a motion sensor that detects, as the physical information of the robot 2, the position or posture of the robot 2 or the speed or acceleration of the robot 2. The sensor may include a current sensor that detects, as the physical information of the robot 2, a current flowing through a motor that drives the robot 2. The sensor may include a torque sensor that detects, as the physical information of the robot 2, a torque of a motor that drives the robot 2.

The sensor may be installed at a joint of the robot 2 or a joint driving unit that drives the j oint. The sensor may be installed at the arm 2A or the end effector 2B of the robot 2.

The sensor outputs detected physical information of the robot 2 to the robot control device 110. The sensor detects and outputs the physical information of the robot 2 at a predetermined timing. The sensor outputs the physical information of the robot 2 as time-series data.

### <Camera 4>

In the example configuration illustrated in FIG. 1, the robot control system 100 includes the camera 4 attached to the end effector 2B of the robot 2. For example, the camera 4 photographs the holding target object 80 in a direction from the end effector 2B toward the holding target object 80. That is, the camera 4 photographs the holding target object 80 in a direction in which the end effector 2B holds the holding target object 80. An image captured by photographing the holding target object 80 in the direction in which the end effector 2B holds the holding target object 80 is also referred to as a holding target image. The camera 4 may include a depth sensor and may be configured to be capable of acquiring depth data of the holding target object 80. The depth data is data regarding distances in individual directions within the range of the angle of view of the depth sensor. More specifically, the depth data is information regarding the distance from the camera 4 to a measurement point. The image captured by the camera 4 may include monochrome brightness information or color brightness information represented by red, green, and blue (RGB) or the like. The number of cameras 4 is not limited to one, and may be two or more.

The camera 4 is not limited to the configuration of being attached to the end effector 2B, and may be provided at any position at which the camera 4 is capable of photographing the holding target object 80. In a configuration in which the camera 4 is attached to a structure other than the end effector 2B, the above-described holding target image may be generated based on an image captured by the camera 4 attached to the structure. The holding target image may be generated by performing image conversion based on the relative position and relative posture of the end effector 2B with respect to the attachment position and attachment posture of the camera 4. Alternatively, the holding target image may be generated using computer-aided design (CAD) and drawing data.

### <Holding mode determination device 10>

As illustrated in FIG. 1, the holding mode determination device 10 includes a controller 12 and an interface (I/F) 14. The interface 14 acquires information or data regarding the holding target object 80 or the like from an external device, and outputs information or data to an external device. The interface 14 acquires a captured image of the holding target object 80 from the camera 4. The interface 14 outputs information or data to the display device 20, and causes a controller of the display device 20, which will be described below, to display the information or data. The controller 12 determines, based on the information or data acquired by the interface 14, a holding mode of the robot 2 for the holding target object 8, and outputs the holding mode to the robot control device 110 via the interface 14.

The controller 12 may include at least one processor to provide control and processing capabilities for executing various functions. The processor may execute a program for implementing the various functions of the controller 12. The processor may be implemented as a single integrated circuit. The integrated circuit is also referred to as an IC. The processor may be implemented as multiple communicably connected integrated circuits and discrete circuits. The processor may be implemented based on other various known techniques.

The controller 12 may include a storage unit. The storage unit may include an electromagnetic storage medium such as a magnetic disk, or may include a memory such as a semiconductor memory or a magnetic memory. The storage unit stores various pieces of information. The storage unit stores a program or the like to be executed by the controller 12. The storage unit may be configured as a non-transitory readable medium. The storage unit may function as a work memory of the controller 12. At least a part of the storage unit may be configured separately from the controller 12.

The interface 14 may include a communication device configured to be capable of wired or wireless communication. The communication device may be configured to be capable of communication in a communication scheme based on various communication standards. The communication device can be configured using a known communication technique.

The interface 14 may include an input device that receives an input of information, data, or the like from a user. The input device may include, for example, a touch panel or a touch sensor, or a pointing device such as a mouse. The input device may include a physical key. The input device may include an audio input device such as a microphone. The interface 14 may be configured to be connectable to an external input device. The interface 14 may be configured to acquire information input to the external input device from the external input device.

The interface 14 may include an output device that outputs information, data, or the like to a user. The output device may include, for example, an audio output device such as a speaker that outputs auditory information such as voice. The output device may include a vibration device that vibrates to provide tactile information to a user. The output device is not limited to these examples, and may include other various devices. The interface 14 may be configured to be connectable to an external output device. The interface 14 may output information to the external output device so that the external output device outputs the information to a user. The interface 14 may be configured to be connectable to the display device 20, which will be described below, as the external output device.

### <Display device 20>

The display device 20 displays information, data, or the like to a user. The display device 20 may include a controller that controls display. The display device 20 may include, for example, a liquid crystal display (LCD), an organic electro-luminescence (EL) display, an inorganic EL display, a plasma display panel (PDP), or the like. The display device 20 is not limited to these displays, and may include other various types of displays. The display device 20 may include a light-emitting device such as a light emission diode (LED) or a laser diode (LD). The display device 20 may include other various devices.

The display device 20 may include an input device that receives an input of information, data, or the like from a user. The input device may include, for example, a touch panel or a touch sensor, or a pointing device such as a mouse. The input device may include a physical key. The input device may include an audio input device such as a microphone. The input device may be connected to, for example, the interface 14.

### <Robot control device 110>

The robot control device 110 acquires information specifying a holding mode from the holding mode determination device 10 and controls the robot 2 such that the robot 2 holds the holding target object 80 in the holding mode determined by the holding mode determination device 10.

The robot control device 110 may include at least one processor to provide control and processing capabilities for executing various functions. The individual components of the robot control device 110 may include at least one processor. Multiple components among the components of the robot control device 110 may be implemented by one processor. The entire robot control device 110 may be implemented by one processor. The processor can execute a program for implementing the various functions of the robot control device 110. The processor may be configured to be the same as or similar to the processor used in the holding mode determination device 10.

The robot control device 110 may include a storage unit. The storage unit may be configured to be the same as or similar to the storage unit used in the holding mode determination device 10.

The robot control device 110 may include the holding mode determination device 10. The robot control device 110 and the holding mode determination device 10 may be configured as separate bodies.

### (Example operation of holding mode determination device 10)

The controller 12 of the holding mode determination device 10 determines, based on a trained model, a holding mode for the holding target object 80. The trained model is configured to receive, as an input, an image captured by photographing the holding target object 80, and output an inference result of a holding mode for the holding target object 80. The controller 12 generates the trained model. The controller 12 acquires an image captured by photographing the holding target object 80 from the camera 4, inputs the image to the trained model, and acquires an inference result of a holding mode for the holding target object 80 from the trained model. The controller 12 determines, based on the inference result of the holding mode for the holding target object 80, the holding mode, and outputs the holding mode to the robot control device 110. The robot control device 110 controls the robot 2 such that the robot 2 holds the holding target object 80 in the holding mode acquired from the holding mode determination device 10.

### <Generation of trained model>

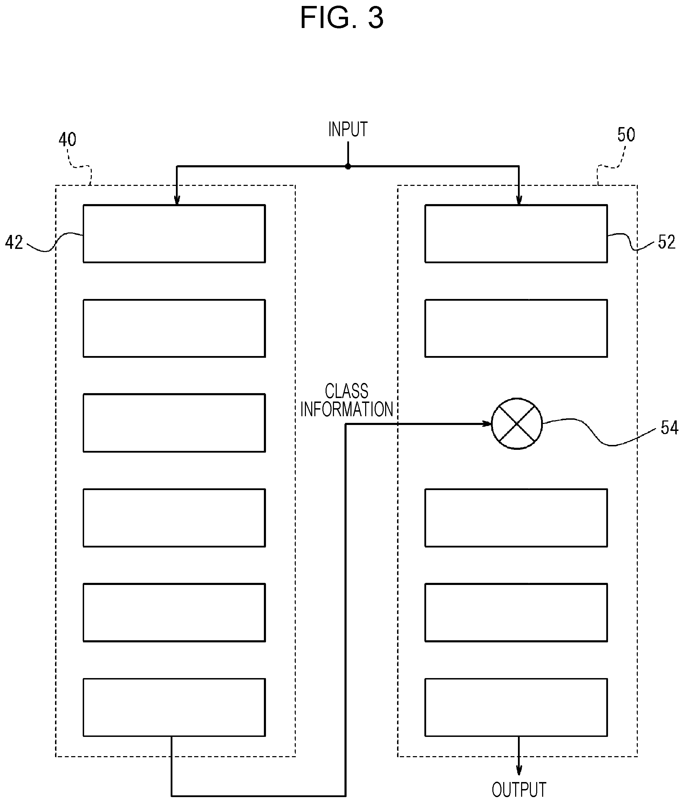

The controller 12 performs learning by using, as learning data, an image captured by photographing the holding target object 80 or an image generated from CAD data or the like of the holding target object 80, and generates a trained model for inferring a holding mode for the holding target object 80. The learning data may include teacher data used in so-called supervised learning. The learning data may include data that is used in so-called unsupervised learning and that is generated by a device that performs learning. An image captured by photographing the holding target object 80 or an image generated as an image of the holding target object 80 is collectively referred to as a target object image. As illustrated in FIG. 3, an inference model includes a class inference model 40 and a holding mode inference model 50. The controller 12 updates the model being trained by learning using a target object image as learning data, and generates a trained model.

The class inference model 40 receives a target object image as an input. The class inference model 40 infers, based on the input target object image, a holding category into which the holding target object 80 is to be classified. That is, the class inference model 40 classifies the target object into any one of multiple inferable holding categories. The multiple holding categories that can be inferred by the class inference model 40 are categories outputtable by the class inference model 40. A holding category is a category indicating a difference in the shape of the holding target object 80, and is also referred to as a class.

The class inference model 40 classifies an input target image into a predetermined class. The class inference model 40 outputs, based on the target object image, a classification result obtained by classifying the holding target object 80 into a predetermined class. In other words, the class inference model 40 infers a class to which the holding target object 80 belongs when the holding target object 80 is classified into a class.

The class inference model 40 outputs a class inference result as class information. The class that can be inferred by the class inference model 40 may be determined based on the shape of the holding target object 80. The class that can be inferred by the class inference model 40 may be determined based on various characteristics such as the surface state, the material, or the hardness of the holding target object 80. In the present embodiment, the number of classes that can be inferred by the class inference model 40 is four. The four classes are referred to as a first class, a second class, a third class, and a fourth class, respectively. The number of classes may be three or less or may be five or more.

The holding mode inference model 50 receives, as an input, a target object image and class information output by the class inference model 40. The holding mode inference model 50 infers, based on the received target object image and class information, a holding mode for the holding target object 80, and outputs a holding mode inference result.

The class inference model 40 and the holding mode inference model 50 are each configured as, for example, a convolution neural network (CNN) including multiple layers. The layers of the class inference model 40 are represented as processing layers 42. The layers of the holding mode inference model 50 are represented as processing layers 52. Information input to the class inference model 40 and the holding mode inference model 50 is subjected to convolution processing based on a predetermined weighting coefficient in each layer of the CNN. In the learning of the class inference model 40 and the holding mode inference model 50, the weighting coefficient is updated. The class inference model 40 and the holding mode inference model 50 may be constituted by VGG16 or ResNet50. The class inference model 40 and the holding mode inference model 50 are not limited to these examples, and may be configured as other various models.

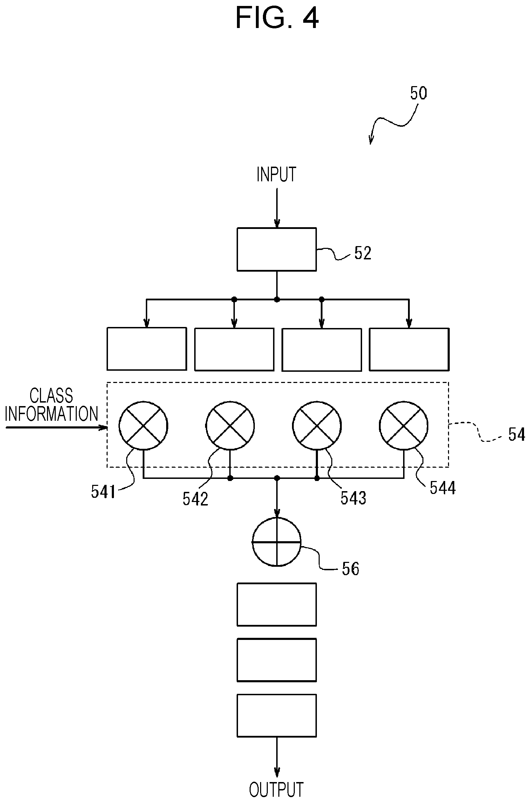

The holding mode inference model 50 includes a multiplier 54 that receives an input of class information. When the number of classes is four, the holding mode inference model 50 branches the holding target object 80 included in an input target object image to the processing layers 52 corresponding to the four classes, as illustrated in FIG. 4. The multiplier 54 includes a first multiplier 541, a second multiplier 542, a third multiplier 543, and a fourth multiplier 544 corresponding to the four classes, respectively. The first multiplier 541, the second multiplier 542, the third multiplier 543, and the fourth multiplier 544 each multiply the output of the processing layer 52 corresponding to a corresponding one of the four classes by a weighting coefficient. The holding mode inference model 50 includes an adder 56 that adds outputs of the first multiplier 541, the second multiplier 542, the third multiplier 543, and the fourth multiplier 544. The output of the adder 56 is input to the processing layer 52. The holding mode inference model 50 outputs, as a holding mode inference result, the output of the processing layer 52 located subsequent to the adder 56.

The weighting coefficient by which each of the first multiplier 541, the second multiplier 542, the third multiplier 543, and the fourth multiplier 544 multiplies the output of the processing layer 52 is determined based on the class information input to the multiplier 54. The class information indicates which of the four classes the holding target object 80 has been classified into. It is assumed that, when the holding target object 80 is classified into the first class, the weighting coefficient of the first multiplier 541 is set to 1, and the weighting coefficients of the second multiplier 542, the third multiplier 543, and the fourth multiplier 544 are set to 0. In this case, the output of the processing layer 52 corresponding to the first class is output from the adder 56.

The class information may represent a probability that the holding target object 80 is classified into each of the four classes. For example, probabilities that the holding target object 80 is classified into the first class, the second class, the third class, and the fourth class may be represented by X1, X2, X3, and X4, respectively. In this case, the adder 56 adds an output obtained by multiplying the output of the processing layer 52 corresponding to the first class by X1, an output obtained by multiplying the output of the processing layer 52 corresponding to the second class by X2, an output obtained by multiplying the output of the processing layer 52 corresponding to the third class by X3, and an output obtained by multiplying the output of the processing layer 52 corresponding to the fourth class by X4, and outputs a result of the addition.

The controller 12 performs learning by using a target object image as learning data, thereby generating the class inference model 40 and the holding mode inference model 50 as a trained model. The controller 12 requires correct answer data to generate the trained model. For example, to generate the class inference model 40, the controller 12 requires learning data associated with information indicating a correct answer about a class into which an image used as learning data is classified. In addition, to generate the holding mode inference model 50, the controller 12 requires learning data associated with information indicating a correct answer about a grasping position of a target object appearing in an image used as learning data.

The trained model used in the robot control system 1 according to the present embodiment may include a model that has learned the class or the grasping position of the target object in a target object image through learning, or may include a model that has not learned the class or the grasping position. Even when the trained model has not learned the class or the grasping position, the controller 12 may infer the class and the grasping position of the target object with reference to the class and the grasping position of a learning object similar to the target object. Thus, in the robot control system 1 according to the present embodiment, the controller 12 may or may not learn the target object itself to generate a trained model.

### <Inference of holding mode by trained model>

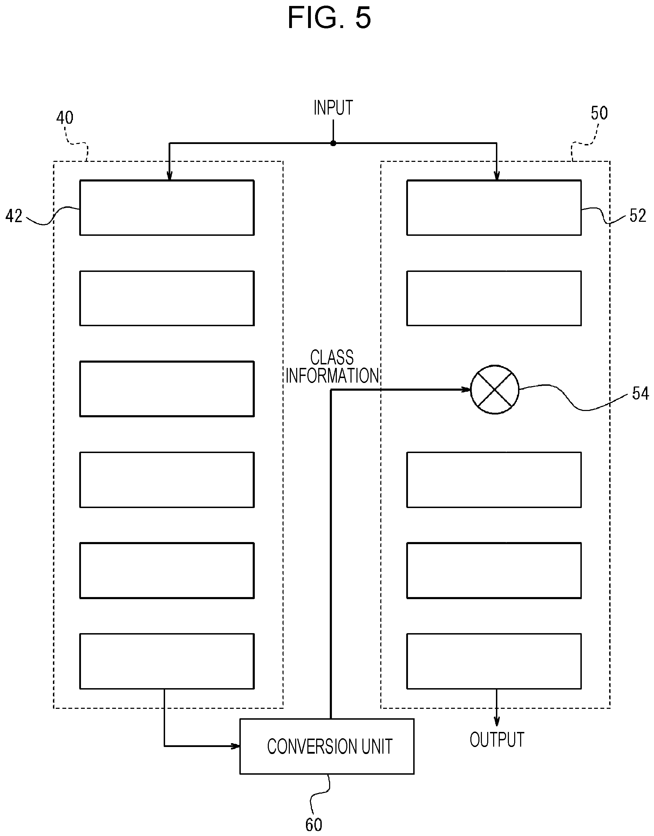

As illustrated in FIG. 5, the controller 12 configures a trained model such that the class information from the class inference model 40 is input to the holding mode inference model 50 via a conversion unit 60. That is, the trained model includes the conversion unit 60 located between the class inference model 40 and the holding mode inference model 50. The controller 12 inputs a target object image to the class inference model 40 and causes the class inference model 40 to output class information. The controller 12 inputs a target object image to the holding mode inference model 50, inputs class information from the class inference model 40 to the holding mode inference model 50 via the conversion unit 60, and causes the holding mode inference model 50 to output an inference result of a holding mode for the holding target object 80.

The class information output from the class inference model 40 indicates the class to which the holding target object 80 included in the input target object image is classified among the first to fourth classes. Specifically, it is assumed that the class inference model 40 is configured to output " 1000" as the class information when the holding category (class) into which the holding target object 80 is to be classified is inferred as the first class. It is assumed that the class inference model 40 is configured to output "0100" as the class information when the holding category (class) into which the holding target object 80 is to be classified is inferred as the second class. It is assumed that the class inference model 40 is configured to output "0010" as the class information when the holding category (class) into which the holding target object 80 is to be classified is inferred as the third class. It is assumed that the class inference model 40 is configured to output "0001" as the class information when the holding category (class) into which the holding target object 80 is to be classified is inferred as the fourth class.

The conversion unit 60 converts the class information received from the class inference model 40 and inputs the converted class information to the multiplier 54 of the holding mode inference model 50. For example, the conversion unit 60 may be configured to, when the class information received from the class inference model 40 is "1000", convert the class information into another character string such as "0100" and output the converted class information to the holding mode inference model 50. The conversion unit 60 may be configured to output the class information "1000" received from the class inference model 40 to the holding mode inference model 50 as it is. The conversion unit 60 may have a table for specifying a rule for converting the class information and may be configured to convert the class information based on the table. The conversion unit 60 may be configured to convert the class information by a matrix, a mathematical expression, or the like.

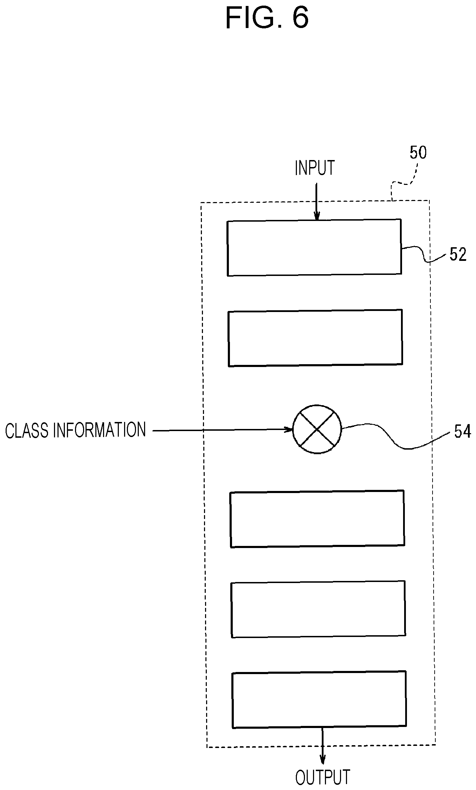

As illustrated in FIG. 6, the controller 12 may apply only the holding mode inference model 50 as a trained model and directly input the class information to the holding mode inference model 50.

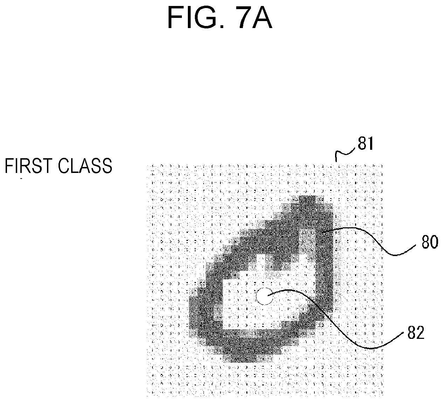

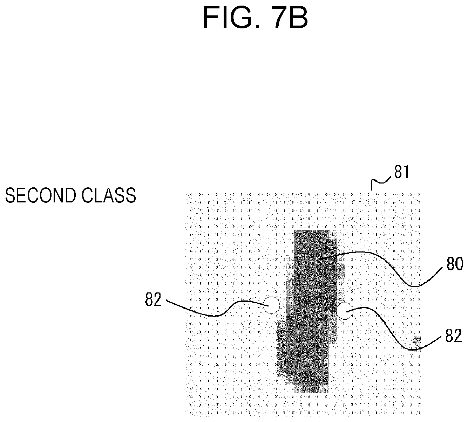

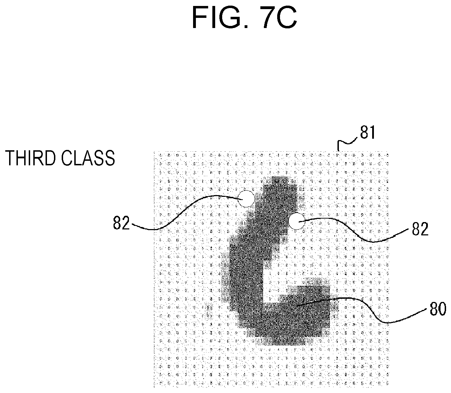

In the present embodiment, it is assumed that shape images 81 each representing the shape of the holding target object 80 illustrated in FIG. 7A, FIG. 7B, and FIG. 7C are input as target object images to the trained model. In this case, it is assumed that the holding target object 80 included in the shape image 81 is classified into a class based on the shape of the holding target object 80. It is assumed that, when the holding target object 80 has an O-shape, the holding target object 80 included in the shape image 81 is classified into the first class. It is assumed that, when the holding target object 80 has an I-shape, the holding target object 80 included in the shape image 81 is classified into the second class. It is assumed that, when the holding target object 80 has a J-shape, the holding target object 80 included in the shape image 81 is classified into the third class. The J-shape can also be regarded as a shape obtained by combining an I-shape and an O-shape. It is assumed that, when the holding target object 80 has another shape, the holding target object 80 included in the shape image 81 is classified into the fourth class.

In response to inferring that the holding target object 80 included in the shape image 81 is classified into the first class, the class inference model 40 outputs "1000" as class information. In response to acquiring "1000" as class information, the holding mode inference model 50 infers, as a holding position 82, an inner side of the O-shaped holding target object 80 in the shape image 81. In response to inferring that the holding target object 80 included in the shape image 81 is classified into the second class, the class inference model 40 outputs "0100" as class information. In response to acquiring "0100" as class information, the holding mode inference model 50 infers, as holding positions 82, positions on both sides of the I-shape near the center of the I-shape in the shape image 81. In response to inferring that the holding target object 80 included in the shape image 81 is classified into the third class, the class inference model 40 outputs "0010" as class information. The holding mode inference model 50 infers the holding position(s) 82 of the holding target object 80 included in the shape image 81 in accordance with the class into which the holding target object 80 included in the shape image 81 has been classified. For example, in response to acquiring "0010" as class information, the holding mode inference model 50 infers, as the holding positions 82, positions on both sides of the J-shape near an end of the J-shape in the shape image 81. In other words, the holding mode inference model 50 infers, as the holding positions 82, positions on both sides of the I-shape near an end of the I-shape far from the O-shape in the shape obtained by combining the I-shape and the O-shape.

### <Setting of conversion rule of conversion unit 60>

The controller 12 is capable of setting a rule for converting class information in the conversion unit 60. The controller 12 receives an input from a user via the interface 14 and sets a rule based on the input from the user.

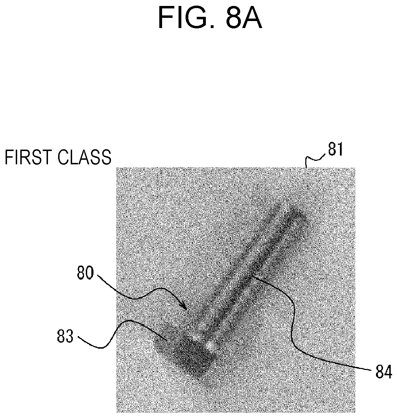

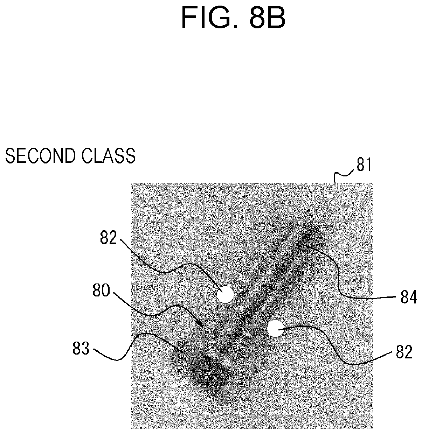

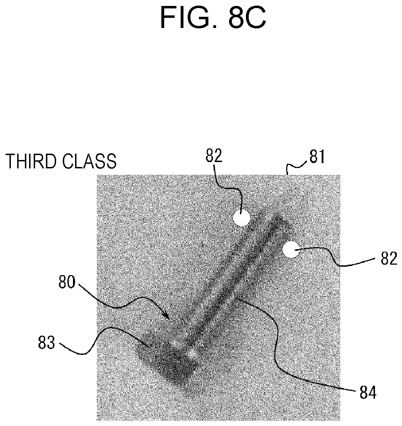

The controller 12 inputs a target object image to the trained model and causes the trained model to output holding modes inferred when the holding target object 80 is classified into each of multiple classes. Specifically, as illustrated in FIG. 8A, FIG. 8B, and FIG. 8C, the controller 12 inputs, as a target object image, an image of the holding target object 80 which is a screw to the trained model. The screw includes a screw head 83 and a screw shaft 84. When the screw as the holding target object 80 included in the shape image 81 of the screw is classified into the first class, the trained model is incapable of specifying the position corresponding to the inner side of the screw and is incapable of inferring the holding position(s) 82. Thus, no holding position 82 is indicated in the shape image 81 including the screw classified into the first class. When the screw as the holding target object 80 included in the shape image 81 of the screw is classified into the second class, the trained model infers, as the holding positions 82, both sides of the screw shaft 84 near the center of the screw shaft 84. When the screw as the holding target object 80 included in the shape image 81 of the screw is classified into the third class, the trained model infers, as the holding positions 82, the positions of both sides of the screw shaft 84 near an end of the screw shaft 84 far from the screw head 83.

The controller 12 presents to a user results of inferring the holding position(s) 82 in the shape image 81 when the trained model classifies the holding target object 80 included in the shape image 81 into each class. Specifically, the controller 12 causes the display device 20 to display, as candidates for the holding position 82 for holding the holding target object 80, the images in which the holding positions 82 are superimposed on the shape image 81 illustrated in FIG. 8A, FIG. 8B, and FIG. 8C, thereby causing the user to visually recognize the images. The user is able to check the holding positions 82 (candidates for the holding position 82) when the holding target object 80 included in the shape image 81 is classified into each class, and determine which holding position 82 is appropriate as a position at which the screw as the holding target object 80 is held. The controller 12 causes the user to input, via the I/F 14, information specifying the holding position(s) 82 determined to be appropriate by the user among the candidates for the holding position 82. Based on the input from the user via the I/F 14, the controller 12 acquires the class corresponding to the holding position(s) 82 determined to be appropriate by the user.

When causing the robot 2 to hold the screw as the holding target object 80, the controller 12 causes the holding mode inference model 50 to infer the holding position(s) 82 of the class determined to be appropriate by the user. Specifically, the controller 12 is capable of controlling the holding position(s) 82 to be inferred by the holding mode inference model 50 by controlling the class information input to the holding mode inference model 50.

For example, when the holding target object 80 included in a target object image is classified into a class corresponding to a screw (for example, the second class), the controller 12 can cause the holding mode inference model 50 to perform inference to output the holding positions 82 as an inference result on the assumption that the holding target object 80 is classified into the third class. In this case, the controller 12 inputs, to the holding mode inference model 50, "0010" indicating the third class as the class information to which the holding target object 80 belongs. Even when the class information output by the class inference model 40 is originally "0100" indicating the second class, the controller 12 inputs "0010" as the class information to the holding mode inference model 50. In other words, although the holding mode for the holding target object 80 classified into the second class is inferred as the holding mode corresponding to the second class in a normal case, the holding mode inference model 50 is caused to infer the holding mode on the assumption that the holding target object 80 has been classified into the third class. The controller 12 sets a conversion rule in the conversion unit 60 such that "0010" is input as class information to the holding mode inference model 50 when the class inference model 40 outputs "0100" as the class information of the holding target object 80.

The controller 12 can cause the class into which the holding target object 80 is classified to be converted into another class and cause the holding mode inference model 50 to perform inference to output an inference result. For example, the controller 12 can cause the holding mode inference model 50 to perform inference such that even when the holding target object 80 is classified into the second class, the holding positions 82 are output as an inference result on the assumption that the holding target object 80 is classified into the third class. The controller 12 can cause the holding mode inference model 50 to perform inference such that even when the holding target object 80 is classified into the third class, the holding positions 82 are output as an inference result on the assumption that the holding target object 80 is classified into the second class. In this case, the controller 12 sets the conversion rule in the conversion unit 60 such that when the class information from the class inference model 40 is "0100", the class information is converted into "0010" and input to the holding mode inference model 50, and that when the class information from the class inference model 40 is "0010", the class information is converted into "0100" and input to the holding mode inference model 50.

As described above, the controller 12 is configured to be capable of setting a conversion rule. Thus, for example, when multiple target objects are consecutively processed, a situation in which the user selects a holding mode every time can be reduced. In this case, for example, a conversion rule may be set such that when a holding mode is once determined by the user, the determined holding mode is applied to the multiple target objects.

In the class inference model 40, a class having no holding mode may be set as a holding category. In this case, the holding mode inference model 50 may infer, in response to input of a certain class, that there is no holding mode. In this case, for example, in the case of consecutively processing multiple target objects, the controller 12 may determine that a target object classified into a class other than the classes assumed by the user among the multiple target objects is a foreign object. The controller 12 is capable of performing control so as not to hold the foreign object by converting the class of the target object determined to be a foreign object into a class having no holding mode according to the set conversion rule.

### <Example procedure of holding mode determination method>

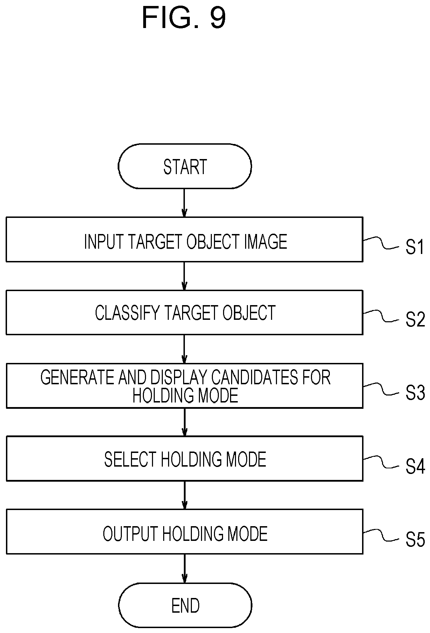

The controller 12 of the holding mode determination device 10 may execute a holding mode determination method including the procedure of the flowchart illustrated in FIG. 9. The holding mode determination method may be implemented as a holding mode determination program to be executed by a processor constituting the controller 12. The holding mode determination program may be stored in a non-transitory computer-readable medium.

The controller 12 inputs a target object image to a trained model (step S1).

The controller 12 causes the class inference model 40 to classify the holding target object 80 included in the target object image into a class (step S2). Specifically, the class inference model 40 infers a class into which the holding target object 80 is classified, and outputs an inference result as class information.

The controller 12 infers holding modes for the holding target object 80 for cases where the holding target object 80 is classified into the class inferred by the class inference model 40 (for example, the third class) or other classes (for example, the first, second, and fourth classes), generates an inference result as candidates for the holding mode, and causes the display device 20 to display the inference result (step S3). Specifically, the controller 12 displays images in which the holding position(s) 82 is(are) superimposed on the target object image. At this time, the images may be displayed such that the class inferred by the class inference model 40 can be identified.

The controller 12 causes the user to select a holding mode from among the candidates (step S4). Specifically, the controller 12 causes the user to input, via the I/F 14, which holding mode is to be selected from among the candidates for the holding mode, and acquires information specifying the holding mode selected by the user. In other words, when the user thinks that the holding mode for the holding target object 80 in the class inferred by the class inference model 40 is not appropriate, the user is allowed to select another holding mode.

The controller 12 causes the trained model to infer a holding mode such that the holding target object 80 is held in the holding mode selected by the user, and outputs the inferred holding mode to the robot control device 110 (step S5). After executing the procedure of step S5, the controller 12 ends the execution of the procedure of the flowchart in FIG. 9.

### <Conclusion>

As described above, the holding mode determination device 10 according to the present embodiment is capable of causing a user to select a holding mode inferred by a trained model and controlling the robot 2 in the holding mode selected by the user. Accordingly, even when the user is unable to control an inference result of the holding mode made by the trained model, the user is able to control the holding mode of the robot 2. As a result, the convenience of the trained model that outputs the holding mode for the holding target object 80 is increased.

### (Other embodiments)

Other embodiments will be described below.

In the above embodiment, the configuration in which the holding mode determination device 10 determines the holding position 82 as a holding mode has been described. The holding mode determination device 10 is capable of determining not only the holding position(s) 82 but also another mode as the holding mode.

For example, the holding mode determination device 10 may determine, as the holding mode, a force to be applied by the robot 2 to hold the holding target object 80. In this case, the holding mode inference model 50 infers and outputs a force to be applied to hold the holding target object 80.

For example, the holding mode determination device 10 may determine, as the holding mode, the type of a hand by which the robot 2 holds the holding target object 80. In this case, the holding mode inference model 50 infers and outputs the type of a hand used to hold the holding target object 80.

The holding mode determination device 10 may cause the display device 20 to display the holding mode inferred by the holding mode inference model 50 such that the holding mode is superimposed on the target object image. When the robot 2 includes at least two fingers for pinching the holding target object 80, the holding mode determination device 10 may cause the positions at which the holding target object 80 is pinched by the fingers to be displayed as the holding positions 82. The holding mode determination device 10 may cause the display device 20 to display a position within a predetermined range from the positions at which the holding target object 80 is pinched.

An embodiment of the holding mode determination device 10 and the robot control system 100 has been described above. The embodiment of the present disclosure can include an embodiment of, in addition to a method or a program for implementing the system or the device, a storage medium (for example, an optical disc, a magneto-optical disk, a CD-ROM, a CD-R, a CD-RW, a magnetic tape, a hard disk, or a memory card) storing the program.

The implementation form of the program is not limited to an application program such as an object code compiled by a compiler or a program code executed by an interpreter, and may be a form such as a program module incorporated in an operating system. The program may or may not be configured such that all processing is performed only in a CPU on a control board. The program may be configured such that a part or the entirety of the program is executed by another processing unit mounted on an expansion board or an expansion unit added to the board as necessary.

The embodiment according to the present disclosure has been described based on the drawings and examples. Note that a person skilled in the art could make various variations or changes based on the present disclosure. Thus, note that the variations or changes are included in the scope of the present disclosure. For example, the functions or the like included in the individual components or the like can be reconfigured without logical inconsistency. Multiple components or the like can be combined into one component or can be divided.

All the structural elements described in the present disclosure and/or all the disclosed methods or all the steps of a process may be combined in any combination except for combinations in which these features are mutually exclusive. Each of the features described in the present disclosure may be replaced with an alternative feature serving for an identical, equivalent, or similar purpose, unless explicitly denied. Thus, unless explicitly denied, each of the disclosed features is merely one example of a comprehensive series of identical or equivalent features.

Furthermore, the embodiment according to the present disclosure is not limited to any specific configuration of the above-described embodiment. The embodiment according to the present disclosure may be extended to all novel features described in the present disclosure, or any combination thereof, or all novel methods described, or processing steps, or any combination thereof.

In the present disclosure, descriptions such as "first" and "second" are identifiers for distinguishing corresponding elements from each other. In the present disclosure, the elements distinguished by "first", "second", and the like may have ordinal numbers exchanged with each other. For example, "first" and "second" serving as identifiers may be exchanged between the first class and the second class. The exchange of the identifiers is performed simultaneously. Even after the exchange of the identifiers, the elements are distinguished from each other. The identifiers may be deleted. The elements whose identifiers have been deleted are distinguished from each other by reference signs. The identifiers such as "first" and "second" in the present disclosure alone are not to be used as a basis for interpreting the order of corresponding elements or the existence of identifiers with smaller numbers.

### REFERENCE SIGNS

10 holding mode determination device (12: controller, 14: interface)
20 display device
40 class inference model (42: processing layer)
50 holding mode inference model (52: processing layer, 54: multiplier (541 to 544: first to fourth multipliers), 56: adder)
60 conversion unit
80 holding target object (83: screw head, 84: screw shaft)
81 shape image
82 holding position
100 robot control system (2: robot, 2A: arm, 2B: end effector, 3: sensor, 4: camera, 5: robot influence range, 6: work start point, 7: work target point, 110: robot control device)

## Claims

1. A holding mode determination device for a robot, the holding mode determination device comprising:
a controller configured to output, to a display device, at least one holding mode of a robot for a target object together with an image of the target object, the at least one holding mode being inferred by classifying the target object into at least one of multiple inferable holding categories; and
an interface configured to acquire, via the display device, a user's selection of the at least one holding mode.

2. The holding mode determination device for a robot according to claim 1, wherein
the interface is configured to output the holding mode selected by the user to a robot control device configured to control an operation of the robot, and
the robot is configured to hold the target object in the holding mode selected by the user.

3. The holding mode determination device for a robot according to claim 1 or 2, wherein the multiple inferable holding categories are holding categories outputtable by a class inference model configured to output, based on the image of the target object, a classification result obtained by classifying the target object into a predetermined class.

4. The holding mode determination device for a robot according to claim 3, wherein the controller is configured to output, to the display device, the holding mode related to each of classification results in response to the classification result being input to a holding mode inference model configured to output, based on a received holding category, the holding mode for the target object.

5. The holding mode determination device for a robot according to claim 4, wherein the holding mode inference model is configured to determine, as a mode in which the robot holds the target object, a position at which the robot holds the target object.

6. The holding mode determination device for a robot according to claim 4 or 5, wherein the holding mode inference model is configured to determine, as a mode in which the robot holds the target object, a force to be applied by the robot to hold the target object.

7. The holding mode determination device for a robot according to any one of claims 4 to 6, wherein the holding mode inference model is configured to determine, as a mode in which the robot holds the target object, a type of a hand by which the robot holds the target object.

8. The holding mode determination device for a robot according to any one of claims 4 to 7, wherein
the robot comprises a holding portion configured to hold the target object, based on the image of the target object acquired from a camera and an output of a trained model comprising the class inference model and the holding mode inference model,
the controller is configured to output the user's selection to the robot, and
the robot is configured to hold the target object in the holding mode that is output, based on the class corresponding to the user's selection, by the holding mode inference model.

9. The holding mode determination device for a robot according to claim 8, wherein
the holding portion comprises at least two fingers configured to pinch the target object, and
the controller is configured to output the holding mode to the display device, the holding mode being positions at which the target object is pinched by the fingers or a position within a predetermined range from the positions at which the target object is pinched.

10. The holding mode determination device for a robot according to any one of claims 1 to 9, wherein the controller is configured to output, to the display device, an image in which a mode of holding the target object is superimposed on the image of the target object.

11. The holding mode determination device for a robot according to any one of claims 1 to 10, wherein the controller is configured to set a conversion rule for converting a classification result of a holding category output by a class inference model into another holding category, the class inference model being configured to classify the target object into at least one of the multiple inferable holding categories.

12. The holding mode determination device for a robot according to any one of claims 1 to 11, wherein the controller is configured to identify a foreign object, based on a result of classifying the target object into at least one of the multiple inferable holding categories.

13. A holding mode determination method for a robot, the holding mode determination method comprising:
outputting, to a display device, at least one holding mode of a robot for a target object together with an image of the target object, the at least one holding mode being inferred by classifying the target object into at least one of multiple inferable holding categories; and
acquiring, via the display device, a user's selection of the at least one holding mode.

14. A robot control system comprising:
a robot;
a robot control device configured to control the robot;
a holding mode determination device configured to determine a mode in which the robot holds a target object; and
a display device, wherein
the holding mode determination device is configured to output, to the display device, at least one holding mode of the robot for the target object together with an image of the target object, the at least one holding mode being inferred by classifying the target object into at least one of multiple inferable holding categories,
the display device is configured to display the image of the target object and the at least one holding mode for the target object, receive an input of a user's selection of the at least one holding mode, and output the user's selection to the holding mode determination device, and
the holding mode determination device is configured to acquire, from the display device, the user's selection of the at least one holding mode.
